# EUROPÄISCHE PATENTSCHRIFT

(11) **EP 0 509 284 B1**
(45) Veröffentlichungstag und Bekanntmachung des Hinweises auf die Patenterteilung: **28.02.1996**
(21) Anmeldenummer: 92105188.4
(22) Anmeldetag: 26.03.1992
(51) Int. Cl.: H04B 1/16, H04B 1/08

(54) **Akkubetriebenes elektronisches Kleingerät mit einer Kopfhörer-Anschlussbuchse zum Anschluss eines Kopfhörers oder einer Ladespannungsquelle**
Rechargeable battery powered electronic equipment with the headphone connector used for connection to either headphones or a battery changer
Appareil électronique alimenté par accumulateur avec connecteur pour casques utilisé pour connexion de casques et d'un chargeur d'accu

(30) Priorität: 19.04.1991 DE 9104788 U
(43) Veröffentlichungstag der Anmeldung: 21.10.1992
(73) Patentinhaber: GRUNDIG E.M.V. Elektro-Mechanische Versuchsanstalt Max Grundig GmbH & Co. KG, D-90762 Fürth (DE)
(72) Erfinder: Stacho, Reinhard, GRUNDIG E.M.V., W-8510 Fuerth (DE)

(56) Entgegenhaltungen:
- GB-A- 2 080 647
- PATENT ABSTRACTS OF JAPAN (E-186)
- PATENT ABSTRACTS OF JAPAN (E-381)

## Beschreibung

### Beschreibung:

Die Erfindung bezieht sich auf ein akkubetriebenes elektronisches Kleingerät nach dem Oberbegriff des Anspruchs 1.

Es sind elektronische Kleingeräte bekannt, die meist am Körper des Benutzers getragen werden und deren elektroakustischen Signale mittels eines am Kleingerät ansteckbaren Kopfhörers wiedergegeben werden. Die Spannungsversorgung dieser Kleingeräte erfolgt entweder über Batterien oder über Akkus. Werden Akkus als Spannungsquelle eingesetzt, so müssen diese nach Unterschreitung einer bestimmten Restspannung wieder aufgeladen werden. Das geschieht entweder dadurch, daß sie aus dem Kleingerät entnommen und in einem Ladegerät geladen werden, oder das Kleingerät besitzt eine eigene Ladebuchse zum Anschluß eines Ladenetzteils. Das Laden der Akkus außerhalb des Kleingerätes erfordert eine umständliche Handhabung, weil zum einen die Akkus aus dem Kleingerät entnommen und nach dem Laden wieder eingesetzt werden müssen und ist zum anderen aufwending, weil ein relativ teueres Ladegerät vorhanden sein muß.

Das Laden der Akkus im Kleingerät ist wesentlich einfacher, weil die Halterung und Kontaktierung der Akkus bereits vorhanden ist und deshalb nur ein Ladenetzteil angeschlossen werden muß. Von Nachteil ist, daß zum Laden mit einem Ladenetzteil kleingeräteseitig eine Anschlußbuchse für das Ladenetzteil benötigt wird. Weiterhin weisen Kleingeräte der genannten Art den Nachteil auf, daß für eine eigene Anschlußbuchse zum Laden der Akkus nur wenig Raum zur Verfügung steht.

Aus der JP - A - 58 068 324 ist ein kleines tragbares Rundfunkgerät mit einem eingebauten Lautsprecher und einem ansteckbaren Kopfhörer bekannt. Ist der eingebaute Lautsprecher in Betrieb, so wird über die Anschlußbuchse, die für den ansteckbaren Kopfhörer vorgesehen ist, ein Kabel angeschlossen, das als Antenne dient. Wird der ansteckbare Kopfhörer an dieser Anschlußbuchse angeschlossen, so kann über den Kopfhörer gehört werden, wobei der interne Lautsprecher getrennt wird und das Kabel des Kopfhörers zugleich als Antenne dient. Bei diesem bekannten Rundfunkgerät wird zwar ebenfalls eine Anschlußbuchse für Kopfhörer auf zweierlei Art verwendet, nämlich als Antenneneingang und als Kopfhöreranschluß. Allerdings kann über diese Buchse nicht der Akku im Innern des Gerätes geladen werden.

Aufgabe der Erfindung ist es, mit geringem Schaltungsaufwand ein Laden der Akkus im Kleingerät zu ermöglichen. Diese Aufgabe wird durch die im Anspruch 1 gekennzeichneten Merkmale gelöst.

Der Erfindung liegt die Erkenntnis zugrunde, daß eine Anschlußbuchse für den Kopfhörer ohnehin Bestandteil eines jeden gattungsgemäßen Kleingerätes ist.

Nach dem Anspruch 2 kann sich parallel zu einem ersten Kopfhörerverstärker ein zweiter Kopfhörerverstärker für den Stereobetrieb befinden. Die Anschlußbuchse wird zur Stereo-Anschlußbuchse für die stereophone Wiedergabe über Kopfhörer.

Entsprechend dem Anspruch 3 kann nun an diese Stereo-Anschlußbuchse entweder ein Stereokopfhörer oder ein Ladenetzteil zum Laden der Akkus angeschlossen werden, wobei für den letzten Fall nur einer der beiden Steckkontakte kontaktiert wird.

Die Ausführungsform gemäß Anspruch 4 bietet die Möglichkeit, mit einem Stereoanschlußstecker, dessen beide Anschlußkontakte mit zwei Kabeln herausgeführt sind, gleichzeitig ein Ladenetzteil und einen Mono-Kopfhörer anzuschließen. Damit kann das Kleingerät während des Ladevorgangs in Wiedergabe betrieben werden.

Die Erfindung wird nachstehend an Hand der in den Zeichnungen dargestellten Ausführungsformen erläutert.

Es zeigen:
- Fig. 1: eine erste Ausführungsform des erfindungsgemäßen Kleingerätes,
- Fig. 2: ein akkubetriebenes elektronisches Kleingerät mit einer Kopfhörer-Anschlußbuchse gemäß dem bekannten Stand der Technik,
- Fig. 3: eine zweite Ausführungsform des erfindungsgemäßen Kleingerätes in Stereo-Ausführung und
- Fig. 4: eine dritte Ausführungsform eines erfindungsgemäßen Rundfunk-Kleingerätes mit Antenneneingang.

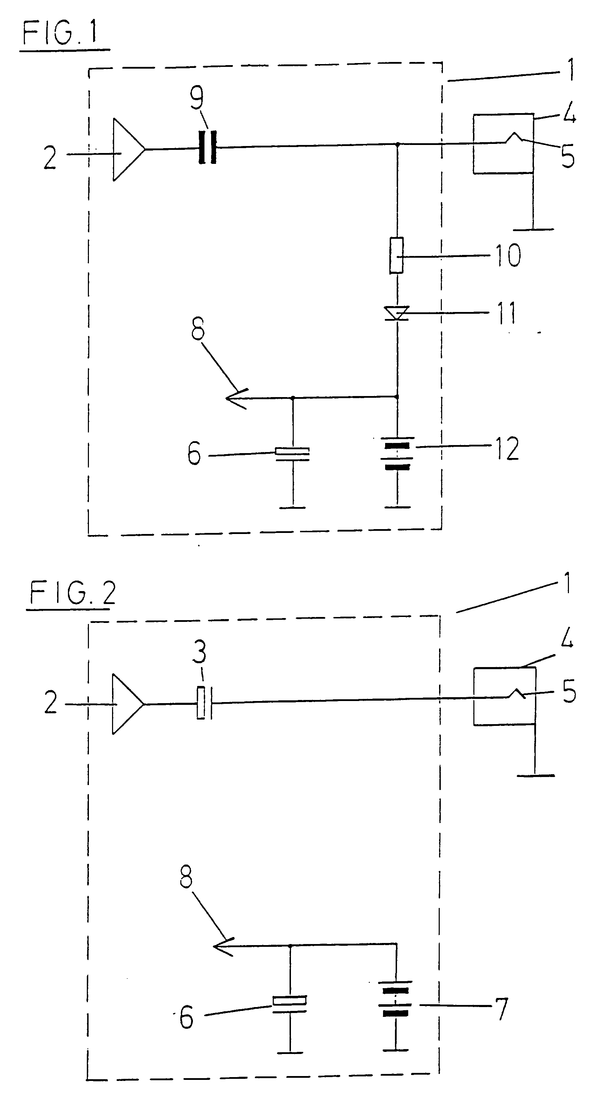

Fig. 1 zeigt eine erste Ausführungsform des erfindungsgemäßen Kleingerätes. Die Batterien 7 (siehe Fig. 2) sind ersetzt durch die Akkus 12. Der Kondensator 3 (siehe Fig. 2) ist durch einen bipolaren Kondensator 9 ersetzt. Zwischen dem Anschlußkontakt 5 und den Akkus 12 befinden sich ein Ladewiderstand 10 und eine Diode 11.

Im Wiedergabebetrieb des Kleingerätes gelangt das Ausgangssignal des Kopfhörerverstärkers 2 über den bipolaren Kondensator 9 an den Anschlußkontakt 5. Wird an Stelle eines Kopfhörers ein Ladenetzteil an die Anschlußbuchse 4 angeschlossen, so fließt ein Ladestrom über den Ladewiderstand 10 und die Diode 11 zu den Akkus 12. Der bipolare Kondensator 9 dient als Ladespannungsschutz. Der Ladewiderstand 10 ist nur notwendig, wenn das Ladenetzteil einen für die Akkus zu hohen Strom liefern würde.

Die Fig. 2 zeigt ein Kleingerät nach dem Stand der Technik. Von dem Ausgang des Kopfhörerverstärkers 2 wird das Ausgangssignal über einen Kondensator 3 zum Kopfhöreranschlußkontakt 5 einer Anschlußbuchse 4 geführt. Die Spannungsversorgung des Kleingerätes erfolgt von Batterien 7 über den Spannungsanschluß 8.

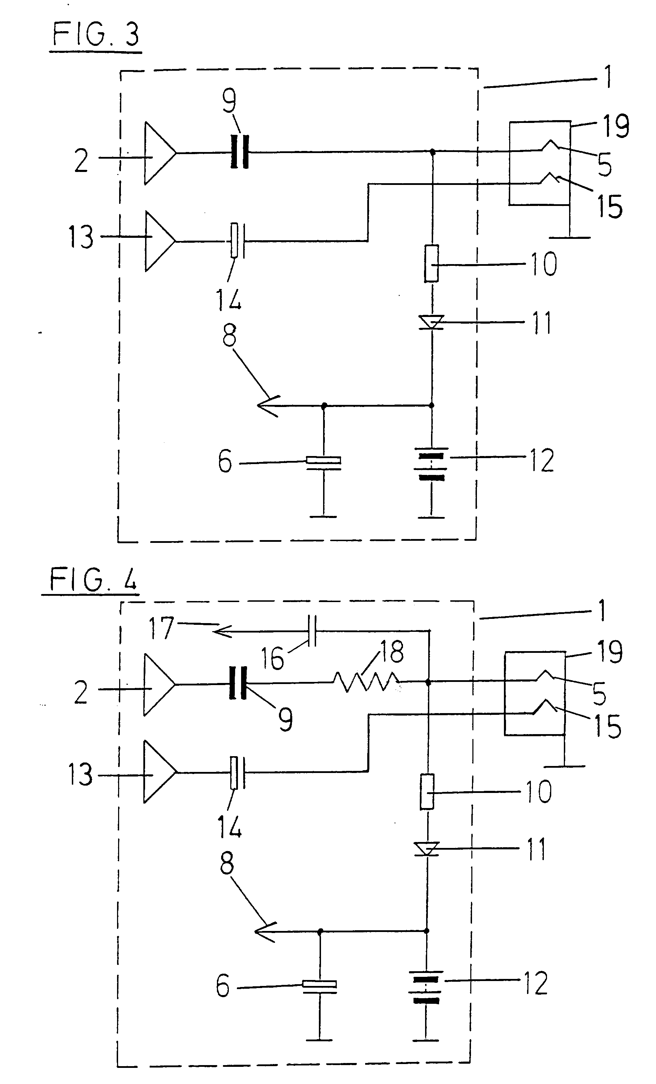

Die Fig. 3 zeigt eine zweite Ausführungsform des erfindungsgemäßen Kleingerätes. Parallel zum Kopfhörerverstärker 2 befindet sich ein zweiter Kopfhörerverstärker 13 für Stereo-Wiedergabe. Das Ausgangssignal dieses Kopfhörerverstärkers wird zu dem Anschlußkontakt 15 der Stereo-Anschlußbuchse 19 geführt.

So kann nun entweder ein Stereo-Kopfhörer oder ein Ladenetzteil an die Anschlußbuchse 19 angeschlossen werden. Für den letzten Fall ist nur der Anschlußkontakt 5 kontaktiert, wobei ein wie bei Fig. 1 beschriebenes Laden der Akkus 12 möglich ist. Es ist weiterhin möglich, über einen Stereo-Anschlußstecker ein Ladenetzteil und einen Mono-Kopfhörer anzuschließen. Für diesen Fall sind die beiden Kontakte des Stereo-Anschlußsteckers über zwei Kabel herausgeführt. Damit kann das Kleingerät während des Ladevorgangs in Wiedergabe eines Kanals betrieben werden.

In Fig. 4 ist eine weitere Ausführungsform für ein Rundfunk-Kleingerät dargestellt.Das Antennensignal 17 wird über den Anschlußkontakt 5 der Anschlußbuchse 19 eingespeist. Als Antenne dient dabei das Kopfhörer-Anschlußkabel. Für diese Ausführungsform werden zusätzlich noch eine Drosselspule 18 und ein Kondensator 16 benötigt. Die Drosselspule 18 dient dabei als Sperre für das hochfrequente Antennensignal, der Kondensator 16 als Sperre für das niederfrequente Ausgangssignal des Kopfhörerverstärkers 2 und der Ladespannung.

## Patentansprüche

1. Akkubetriebenes Kleingerät (1) zur Wiedergabe von elektroakustischen Signalen, bei dem sich die Akkus (12) im Geräteinnern befinden, wobei das Kleingerät (1) ein Rundfunkgerät, ein Kassettengerät, ein CD-Gerät, ein Diktiergerät oder eine Kombination dieser Geräte sein kann und die elektroakustischen Signale über einen mittels Kabel und Stecker an einer Anschlußbuchse (4) des Kleingerätes (1) angeschlossenen Kopfhörers wiedergegeben werden, **gekennzeichnet durch** folgende Merkmale:
- zwischen dem Ausgang eines Kopfhörerverstärkers (2) und einem Anschlußkontakt (5) der Anschlußbuchse (4) befindet sich ein bipolarer Kondensator (9),
- zwischen dem Anschlußkontakt (5) der Anschlußbuchse (4) und den Akkus (12) befinden sich in Reihe geschaltet ein Ladewiderstand (10) und eine Diode (11),
- an die Anschlußbuchse (4) ist wahlweise ein Kopfhörer oder die Ladespannungsquelle zum Laden der Akkus (12) anschließbar.

2. Akkubetriebenes Kleingerät (1) nach Anspruch 1,
**dadurch gekennzeichnet,** daß
parallel zum ersten Kopfhörerverstärker (2) ein zweiter Kopfhörerverstärker (13) geschaltet ist, der über einen Kondensator (14) an einen Anschlußkontakt (15) einer Stereo-Anschlußbuchse (19) angeschlossen ist.

3. Akkubetriebenes Kleingerät (1) nach Anspruch 2,
**dadurch gekennzeichnet,** daß
an die Stereo-Anschlußbuchse (19) wahlweise ein Stereokopfhörer oder eine Ladespannungsquelle anschließbar ist, wobei im letzten Fall nur der Anschlußkontakt (5) der Stereo-Anschlußbuchse (19) kontaktiert wird.

4. Akkubetriebenes Kleingerät (1) nach Anspruch 2,
**dadurch gekennzeichnet,** daß
an die Stereo-Anschlußbuchse (19) ein Stereo-Stecker anschließbar ist, der den Anschlußkontakt (15) mit einem Kopfhörer und den Anschlußkontakt (5) mit einer Ladespannungsquelle verbindet.

## Claims

1. An accumulator-driven small device (1) for the reproduction of electro-acoustic signals wherein the accumulators (12) are arranged in the interior of the device, where the small device (1) can be a broadcast device, a cassette device, a CD device, a dictating device or a combination of these devices and the electro-acoustic signals are reproduced via a headset which is connected by means of a cable and a plug to a connection socket (4) of the small device (1), characterised by the following features:
- a bipolar capacitor (9) is arranged between the output of a headset amplifier (2) and a connection contact (5) of the connection socket (4),
- a charging resistor (10) and a diode (11) are arranged, connected in series, between the connection contact (5) of the connection socket (4) and the accumulators (12),
- selectively a headset or the charging voltage source for the charging of the accumulators (12) can be connected to the connection socket (4).

2. An accumulator-driven small device (1) as claimed in Claim 1, characterised in that a second headset amplifier (13) is connected in parallel to the first headset amplifier (2), which second headset amplifier (13) is connected via a capacitor (14) to a connection contact (15) of a stereo connection socket (19).

3. An accumulator-driven small device (1) as claimed in Claim 2, characterised in that selectively a stereo headset or a charging voltage source can be connected to the stereo connection socket (19), where in the second-mentioned case only the connection contact (5) of the stereo connection socket (19) is contacted.

4. An accumulator-driven small device (1) as claimed in Claim 2, characterised in that a stereo plug can be connected to the stereo connection socket (19), which stereo plug connects the connection contact (15) to a headset and the connection contact (5) to a charging voltage source.

## Revendications

1. Petit appareil (1) alimenté par des accumulateurs pour la reproduction de signaux électro-acoustiques, dans lequel les accumulateurs (12) sont situés à l'intérieur de l'appareil, le petit appareil (1) pouvant être un appareil radio, un appareil à cassettes, un appareil à disque compact, un dictaphone ou une combinaison de ces appareils, et les signaux électro-acoustiques étant reproduits par l'intermédiaire d'un casque raccordé au moyen d'un câble et d'un connecteur à une douille de raccordement (4) dudit appareil (1), caractérisé par les caractéristiques suivantes :
- un condensateur bipolaire (9) est disposé entre la sortie d'un amplificateur (2) du casque et un contact de raccordement (5) de la douille de raccordement (4),
- une résistance de charge (10) et une diode (11) sont branchées en série entre le contact de raccordement (5) de la douille de raccordement (4) et les accumulateurs (12),
- un casque ou la source de tension de charge servant à charger les accumulateurs (12) peut être raccordé au choix à la douille de raccordement (4).

2. Petit appareil (1) alimenté par des accumulateurs selon la revendication 1, caractérisé en ce qu'en parallèle avec le premier amplificateur (2) du casque est branché un second amplificateur (13) du casque, qui est raccordé au moyen d'un condensateur (14) à un contact de raccordement (15) et une douille de raccordement stéréo (19).

3. Petit appareil (1) alimenté par des accumulateurs selon la revendication 2, caractérisé en ce qu'à la douille de raccordement stéréo (19) peut être raccordé au choix un casque stéréo ou une source de tension de charge, et dans ce dernier cas, un contact est établi uniquement avec le contact de raccordement (5) de la douille de raccordement stéréo (19).

4. Petit appareil (1) alimenté par des accumulateurs selon la revendication 2, caractérisé en ce qu'à la douille de raccordement stéréo (19) peut être raccordé un connecteur stéréo, qui relie le contact de raccordement (15) à un casque et le contact de raccordement (5) à une source de tension de charge.
